# EUROPÄISCHE PATENTSCHRIFT

(11) **EP 3 257 365 B1**
(45) Veröffentlichungstag und Bekanntmachung des Hinweises auf die Patenterteilung: **06.10.2021**
(21) Anmeldenummer: 17000978.1
(22) Anmeldetag: 09.06.2017
(51) Int. Cl.: A01G 23/00, A01G 17/00

(54) **KOMBINATIONSVERFAHREN FÜR DIE PLANTAGENWIRTSCHAFT (KURZUMTRIEBSPLANTAGEN)**
COMBINATION PROCESS FOR PLANTATIONS (SHORT ROTATION PLANTATIONS)
PROCÉDÉ DE COMBINAISON POUR LA LIGNICULTURE (TAILLIS À COURTE ROTATION)

(30) Priorität: 14.06.2016 DE 102016007175
(43) Veröffentlichungstag der Anmeldung: 20.12.2017
(73) Patentinhaber: Wald21 GmbH, 97215 Uffenheim (DE)
(72) Erfinder: Kudlich, Wolfram, 97074 Würzburg (DE)

(56) Entgegenhaltungen:
- RU-C1- 2 070 379
- US-A1- 2004 268 428
- US-A1- 2008 236 463
- US-A1- 2012 145 056
- Spiecker H: "Neue Optionen für eine nachhaltige Landnutzung", Agroforst Projekt , 1 June 2009 (2009-06-01), Retrieved from the Internet: URL:http://www.agroforst.uni-freiburg.de/d ownload/BMBF0330621_24-11-09.pdf [retrieved on 2020-12-02]

## Beschreibung

### Gebiet der Erfindung

Die Erfindung betrifft ein Verfahren zum Bewirtschaften einer Baumplantage, insbesondere einer Kurzumtriebsplantage mit schnellwachsenden Bäumen wie beispielsweise Pappel und Robinie, und eine Plantage, die mit diesem Verfahren bewirtschaftet wird.

### Stand der Technik

Derzeit gibt es im Wesentlichen zwei verschiedene Ansätze für die Holzproduktion. Zum Einen gibt es den forstwirtschaftlichen Ansatz zur Holzproduktion im Wald, der sich bei der Flächenanlage und Bewirtschaftung ausschließlich daran orientiert, den maximalen Ertrag aus der Stammholznutzung zu generieren. Die Durchforstungen (schrittweise Reduzierung der Baumanzahl auf Fläche) folgen ausschließlich diesem Produktionsziel. Die Anzahl der Stammholzbäume (im folgenden auch Zielbaum oder Z-Baum genannt) ist abhängig von den Durchforstungsprämissen variabel. Das Verfahren ist aufwändig, da im Prinzip jeder Baum bei jeder Durchforstung einzeln begutachtet, bewertet und gekennzeichnet werden muß und die Abholzung sukzessive erfolgt. Energieholz, das bei Durchforstungen bzw. später der Ernte der Bäume anfällt, ist lediglich Koppelprodukt, nicht Produktionsziel. Wusch des Försters ist derzeit eine kostendeckende Durchforstung.

Bei der Plantagenwirtschaft (Kurzumtriebsplantagen) wird hingegen ganz gezielt auf lediglich ein bestimmtes Produktionsziel hingearbeitet: die Stammholzproduktion oder die Energieholzproduktion.

Für die Stammholzproduktion in der Plantagenwirtschaft gelten grundsätzlich sehr weite Pflanzabstände (ca. 100 bis 600 Bäume / ha), da ausschließlich Z-Bäume gepflanzt werden. Die Bäumen werden auch in parallelen Reihen angepflanzt, bei denen die einzelnen Stammholzbäume in jeder Reihe im Wesentlichen auf gleicher Höhe eingepflanzt werden. Es dauert hier je nach Baumart und Pflanzabstand relativ lange bis die Bäume die komplette Fläche überschirmen. Die komplette Nutzung des einfallenden Lichts für Photosynthese auf der Fläche erfolgt damit erst spät. Das Flächenpotential (Wasser/Lichtangebot) wird daher über einen großen Zeitraum nicht ausgenutzt und damit verschwendet.

Die Plantagenwirtschaft bei der Energieholzproduktion (Ernte alle 3-10 Jahre) hingegen versucht, durch enge Pflanzverbände (ca. 2.500 - 12.000 Bäume / ha) dieses Flächenpotential schneller auszunutzen und setzt zudem auf den Stockausschlag der Bäume (einmal pflanzen mehrfach ernten). Aufgrund des engen Pflanzverbands sind hier nur relativ geringe Stammholzdicken möglich, sodass diese Produktionsform für eine Stammholznutzung nicht in Frage kommt. Eine spätere Veränderung oder Erweiterung des Produktionsziels, um damit auch Stammholzbäume zu generieren, wäre nur bedingt möglich. Gründe hierfür sind, dass dies nur nach einer aufwändigen Positivauslese von Z-Bäumen (analog der Durchforstung im Forst) erfolgen kann, mangels Wertentastung (dem frühen Wegschneiden von untenliegenden kleinen Seitenästen um Asteinschlüsse im Holz, die zur Wertminderung des Stammholzes führen, zu vermeiden) nur niedrige Verkaufspreise erlöst werden können und ggf. eine ineffiziente, teure Ernte aufgrund ungeeigneter Pflanzverbände zu erwarten ist.

Die US 2008/0236463 A1 offenbart ein Verfahren zum Anbauen von Baumgewächsen in nebeneinanderliegenden Reihen und jährlich abbaubaren Energiegewächsen, die zwischen den Reihen für die Baumgewächse angeordnet sind. Die Baumgewächse werden nach einem Zeitraum bewertet und gegebenenfalls verwertet oder gefällt um anderen Bäumen in derselben Reihe einen besseren Wuchs zu ermöglichen. In unterschiedlichen Reihen der Baumgewächse können auch unterschiedliche Bäume gepflanzt werden.

Die US 2004/0268428 A1 offenbart ein Verfahren zum Pflanzen von ersten Bäumen ("first genetric crop") in einem ersten Abstand und zwischen diesen ersten Bäumen sind zweite Bäume (second genetic crop) angeordnet. Die ersten Bäume sind hochwertige Bäume, während die zweiten Bäume einen vergleichsweise geringen Wert aufweisen. Zwischen den Baumreihen wird nichts angebaut. Die Entfernung der einzelnen Baumreihen sind so gewählt, dass die ersten Bäume ideale Wachstumsbedingungen haben.

### Darstellung der Erfindung

Aufgabe der Erfindung ist es, den Ertrag bei der Holzplantagenwirtschaft zu optimieren. Ein erfindungsgemäßes Verfahren umfasst die Merkmale des Anspruchs 1. Durch ein solches Verfahren, das in der herkömmlichen Plantagenwirtschaft (Kurzumtriebsplantagenbewirtschaftung) nicht verwendet wird, wird es in der Plantagenwirtschaft ermöglicht, auf zwei statt nur auf ein Produktionsziel hinzuarbeiten und zu planen und den Ertrag aus einer Plantage zu maximieren. Dies gilt Insbesondere, da aufgrund der relativ hohen Baumzahl pro Hektar das Flächenpotential frühzeitig ausgeschöpft wird, trotz hoher Baumzahl aufgrund der Anordnung der Bäume und stattfindenden Ernten der Energieholzbäume der Kronenraum der Z-Bäume und damit das Zuwachspotential an Stammholz nicht oder zumindest nur äußerst gering eingeschränkt wird und es aufgrund der Wiederausschlagsfähigkeit der Bäume möglich ist, die Energieholzbäume mehrfach zu beernten, und so der Ertrag aus Energieholz weiter gesteigert wird.

Ein weiteres erfindungsgemäßes Verfahren betrifft ein Verfahren gemäß Anspruch 2.

Das Verfahren ermöglicht die Maximierung des Holzertrags bei einer gegebenen Fläche. Das Kombinationsverfahren (also das auf Energieholzbäume und Stammholzbäume ausgerichtete Verfahren der Erfindung) unterscheidet sich zur Forstwirtschaft sowie zu den heutigen Plantagenbewirtschaftungssystemen für Bäume durch ein auf zwei gleichgewichtete Produktionsziele ausgerichtetes Anbauverfahren unter der Prämisse der Maximierung der Nutzung des Flächenpotentials. Damit stellt dieses Anbauverfahren im Hinblick auf das Konzept der Bioökonomie eine erhebliche Neuerung dar. Denn während Anbau und Bewirtschaftung im Forst lediglich auf das Produktionsziel Stammholz abzielt und Energieholz nur als Koppelprodukt abfällt, gibt es in der Plantagenwirtschaft derzeit nur Anbauverfahren mit dem Produktionsziel Stammholz- oder Energieholzproduktion. Unter der Prämisse der Maximierung der Nutzung des Flächenpotentials folgt das Kombinationsverfahren einem festen Bewirtschaftungsverfahren (inklusive Anbauplan), das bereits bei Anlage der Fläche fest steht und diese Ziele berücksichtigt. Durch dieses Bewirtschaftungsverfahren lassen sich gegenüber den herkömmlichen Anbausystemen in Forst oder Plantage ca. 20-30 Prozent höhere Erträge erzielen, bei gleichzeitig niedrigeren Etablierungs- und Pflegekosten.

Wenn innerhalb einer Reihe von Stammholzbäumen auch Energieholzbäume vorgesehen sind, kann der Ertrag weiter erhöht werden.

Vorzugsweise werden bei den Verfahren in vorbestimmten Positionen zusätzliche Energieholzbäume als Schutzbäume (E2-Bäume) für die Z-Bäume vorgesehen. Diese Positionen liegen insbesondere in der Reihe der Z-Bäume. Die E2-Bäume dienen zur Begrenzung des Lichteinfalls auf die Z-Bäume und Bestandsstabilisierung gegen Witterungseinflüsse und sind erst bei der 2ten Energieholzernte für die Produktion von Energieholz gedacht, sobald sich die Z-Bäume weit genug entwickelt haben. Durch die E2-Bäume, die zwischen den Z-Bäumen angepflanzt werden, wird verhindert, dass die Z-Bäume durch seitlichen Lichteinfall Äste ausbilden bzw. wird die Astbildung zumindest stark gebremst. Stattdessen wird ein möglichst astloser Wuchs in die Höhe begünstigt, was für Stammholzbäume grundsätzlich gewünscht ist. Damit verringert sich auch der Entastungsaufwand im Verhältnis zur Plantagenwirtschaft mit reiner Stammholzproduktion. Weiterhin dienen die E2-Bäume der Bestandsstabilisierung nach der ersten Energieholzernte.

Die Abstände zwischen zwei benachbarten Z-Baumreihen (Rückegassenbreite) beträgt mindestens 4m um eine technische Beerntung zu ermöglichen. Bei Pflanzung der Z-Bäume im Dreiecksraster bedeutet dies, dass für die Abstände zwischen benachbarten Z-Bäumen zweier benachbarter Reihen insbesondere zumindest 4x vorgesehen sind, weiter vorzugsweise mindestens 5,5m, weiter vorzugsweise mindestens 6m. Als Maximalabstand sind vorzugsweise 14m vorgesehen, da ansonsten zuviel Platz ungenutzt bleiben würde. Insbesondere ist der Mindestabstand zwischen zwei Z-Bäumen aus benachbarten Reihen (der Basisabstand) immer der kleinste Abstand. D.h. dass die Abstände zweier Z-Bäume innerhalb einer Reihe immer gleich oder größer sind als zu den nächsten Z-Bäumen einer benachbarten Reihe.

Bei den Verfahren werden innerhalb der Z-Baumreihen und benachbart zu den Z-Bäumen jeweils ein bis zwei Stellvertreter für die Z-Bäume gepflanzt. Diese Stellvertreter dienen ausschließlich zum Ersatz des ursprünglich vorgesehenen Z-Baums, wenn nach einem vorbestimmten Zeitraum, bspw. nach einem halben, einem oder eineinhalb Jahren festgestellt wird, dass der geplante Z-Baum nicht ein vorgegebenes Wuchsverhalten aufweist (=Abgleich). Der Stellvertreter wird dabei erst begutachtet, wenn der ursprüngliche Z-Baum verworfen wird. In diesem Fall wird der wüchsigste Stellvertreter zum neuen Z-Baum bestimmt. Am Ende dieses Abgleichs zwischen Z-Baum und Stellvertreter werden die beiden Nachbarn des endgültigen Z-Baums, also in der Regel die Stellvertreter gefällt.

In einer Ausgestaltung der Erfindung ist vorgesehen, dass die Z-Bäume in zwei benachbarten Z-Baumreihen versetzt angeordnet sind. Dadurch kann eine optimalere Verteilung der Z-Bäume auf die Gesamtfläche erreicht werden, insbesondere wenn gleichzeitig Schutzbäume vorgesehen werden. Bei einer versetzten Anordnung ist es bevorzugt, dass die benachbarten Z-Bäume in einer Reihe zusammen mit einem Z-Baum einer benachbarten Reihe ein im Wesentlichen gleichschenkliges, insbesondere gleichseitiges Dreieck ausbildet. Die gleichen Schenkel des Dreiecks stehen vorzugsweise in einem Winkel von 55° bis 65° oder 85° bis 95° zueinander. Die idealen Winkel sind insbesondere 60° und 90°.

Die Erfindung betrifft weiterhin eine Plantage gemäß Anspruch 8.

### Kurze Beschreibung der Figuren

- Figur 1: zeigt eine Draufsicht auf einen Plantagenplan bei der die Z-Bäume in einem gleichschenkligen Dreiecksschema angeordnet sind, für Flächen mit niedriger Z-Baumanzahl und Schutzbäumen
- Figur 2: zeigt eine Draufsicht auf einen Plantagenplan bei der die Z-Bäume in einem gleichseitigen Dreiecksschema angeordnet sind, für Flächen mit hoher Z-Baumanzahl ohne Schutzbäumen.

### Beschreibung der bevorzugten Ausführungsform

In der folgenden Beschreibung werden alle Jahresangaben unter Berücksichtigung des Mitteleuropäischen Klimas getätigt.

Um das erfinderische Kombinationsverfahren durchzuführen, werden zuerst vorbereitende Handlungen durchgeführt und vor der Pflanzung die Verfahrensdurchführung festgelegt. Hierzu wird insbesondere abgeleitet vom Zieldurchmesser des Z-Baumstammes von beispielsweise 30-45cm zum Erntezeitpunkt eine konkrete Anzahl von sogenannten Z-Bäumen (Stammholzbäumen Z) errechnet (100-600 Bäume pro ha). Diesen wird jeweils der gleiche potentielle Standraum an verschiedenen Standorten zugewiesen, so dass sie gleichmäßig über die Plantagenfläche verteilt sind (das so genannte Z-Baumraster). Der sich ergebende idealtypische gleichmäßige Abstand zwischen den Z-Bäumen zweier benachbarten Reihen (im folgenden Basisabstand genannt) beträgt dann mindestens 4m, vorzugsweise mindestens 5,5 oder mindestens 6m, bis insbesondere maximal 14m. Bei einer optimalen Verteilung der Z-Bäume im Hinblick auf einen sich gleichmäßig von der Stammmitte nach außen zu entwickelnden Kronenraum sind die Bäume zweier benachbart liegender Reihen im Wesentlichen versetzt angeordnet. Für die Bepflanzung innerhalb einer Z-Baumreihe werden dann die Abstände der Z-Bäume auf Grundlage des Basisabstands je nach gewünschter Bepflanzungsdichte und der Rückegassenbreite berechnet.

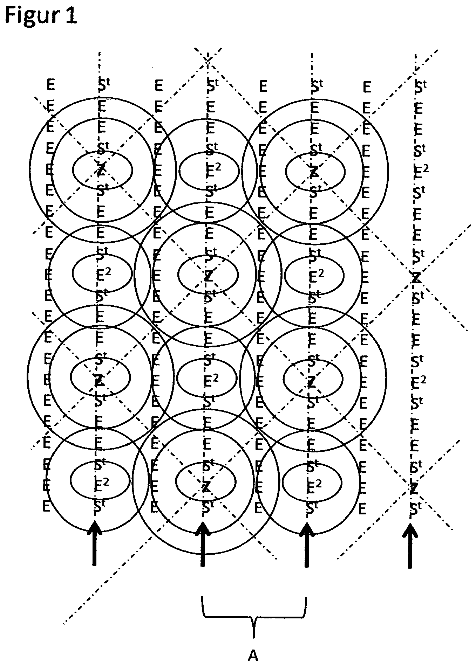

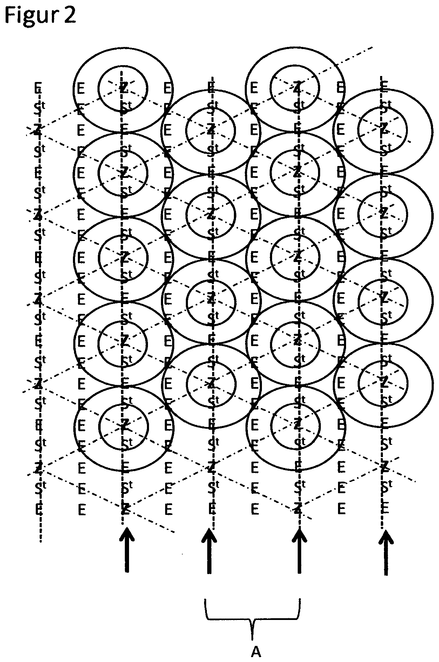

In Figur 1 und 2 sind die Raster als ideale Anordnungen dargestellt (die Baumkronen sind schematisch als Oval und Kreis dargestellt, auch wenn die Kronen eher eckig werden um den Lichtraum auszunutzen, die verschiedenen Bäume werden mit ihren jeweiligen Bezugszeichen Z, E2, St und E und die Abstände zwischen den Rastern mit A bezeichnet). Die Form des Rasters ist bevorzugt dreieckförmig, wenn ein Muster aus drei benachbarten Bäumen erstellt wird (oder viereckförmig, wenn zwei benachbarte Dreiecke zusammengefügt werden). In einer Ausführungsform ist das Dreieck als im Wesentlichen gleichschenkliges Dreieck ausgestaltet (das Viereck ist dann ein Quadrat). Besonders bevorzugt ist der Winkel, den die gleichen Schenkeln einschließen, die zwischen den zwei Bäumen der ersten Reihe und dem benachbarten Baum der zweiten Reihe gezogen sind, zwischen 55° und 65°, insbesondere 59° bis 61° Grad (bei einem gleichseitigen Dreiecksraster), oder zwischen 85° und 95°, insbesondere 89° bis 91° Grad (bei einem rechtwinklig-gleichschenkligen Dreieck). Bei einer niedrigen Anzahl von Z-Bäumen (weniger als 300 pro ha) ist ein gleichschenkliges Dreiecksraster bevorzugt, bei dem zwischen den Z-Bäumen innerhalb einer Reihe ein größerer Abstand vorgesehen ist, als dem Basisabstand zwischen den Z-Bäumen zweier benachbarten Reihen. Bein einer hohen Anzahl von Z-Bäumen (mehr als 300 pro ha) wird ein gleichseitiges Dreiecksraster bevorzugt, bei dem zwischen den Z-Bäumen innerhalb einer Reihe ein Abstand vorgesehen ist, der im Wesentlichen dem Basisabstand entspricht. Bei solchen engen Pflanzverbänden ist davon auszugehen, dass der Kronenraum nach der 2ten Energiebaumernte kaum mehr zunimmt.

In diesem Raster werden sogenannte "Energieholzreihen" aus einzelnen Energieholzbäumen E eingefügt, bzw. insbesondere Energieholzbäume E ebenso zwischen den Z-bäumen Z in einer Reihe gepflanzt (Z-Baumreihen). Diese Energieholzbäume E dienen der Energieholzgewinnung (beispielsweise Holzhackschnitzel) und werden bis zum Zeitpunkt der Ernte der Z-Bäume in der Regel zweimal beerntet (bspw. alle 7 Jahre). Die Pappel und auch die Robinie sind stockausschlagsfähige Bäume und können demzufolge mehrfach beerntet (gefällt) werden. Die Pflanzung in Reihen wird der Anforderung an heutige, effiziente Pflanz-, Pflege- und Erntetechnik gerecht. Bei weiten Z-Baumabständen von regelmäßig > ca. 6m gibt es die Besonderheit, dass Schutzbäume (E2-Bäume) gepflanzt werden können. Diese Schutzbäume E2 sind Energieholzbäume E die erstmalig in der 2ten Energieholzernte beerntet werden. Ihre Anzahl entspricht in etwa der der Z-Bäume Z, wobei sie mittig zu den Z-Bäumen in die gleiche Pflanzreihe wie die Z-Bäume gepflanzt werden (siehe Figur 1). Ihre wesentliche Funktion ist es, die Z-Bäume nach der ersten Energieholzernte zu schützen und zu erziehen. Weiterer Vorteil der E2-Bäume ist insbesondere bei Verwendung schnellwachsender Bäume wie Pappel und Robinie, dass sich durch die bis zur zweiten Ernte verlängerte Standzeit bis zur Ernte der Energieholzertrag überproportional erhöht (progressiver Holzzuwachs). Die E2-Bäume nutzen den von den Z-Bäumen zunächst noch nicht genutzten Wuchsraum (siehe den Kronenraum in den Figuren 1 und 2). Gleichzeitig verhindern sie auch, dass der seitliche Lichteinfall zu vermehrtem Astwuchs an den Z-Bäumen führt. Da der Abstand zwischen den Z-Bäumen direkt auch Einfluß auf die Rückegassenbreite A hat, ergibt sich die technische Grenze dieses Pflanzverbandes, da sich die Energiebäume bei zu engen Rückegassen technisch nicht mehr beemten lassen (bspw. entspricht ein Z-Baumabstand von 6m einer Rückegassenbreite von 4,25m).

Soweit bei engeren Pflanzverbänden (entspricht hoher Z-Baumzahl) auf die Schutzwirkung der E2-Bäume verzichtet werden kann oder muss, wird idealerweise das Z-Baum-Raster in Form aneinander liegender gleichschenkliger Dreiecke gestaltet (siehe Figur 2). Eine Anwendung dieses "natürlichen" Rasters (Hexagonal / Bienenwabe) bei weiten Abständen ist nicht möglich, da die E2-Bäume als Schutz in der zu beerntenden Energieholzreihe verbleiben müssten. Damit wäre eine Energieholzernte erheblich erschwert, teuer und im Extremfall sogar unmöglich. Grund hierfür ist, dass je stärker der Aktionsradius der Erntemaschinen durch auf der Fläche verbleibende Bäume eingeschränkt wird, desto umständlicher wird die Erntemaßnahme, bestehend aus Fällung der Bäume und Rücken der gefällten Bäume an den Feldrand.

Bei engeren Z-Baumabständen als 4,5m sind Energieholzernten nur sehr aufwändig durchführbar, da auch bei einer Pflanzung im Dreiecksraster die Rückegassenbreite mit weniger als 4m zu gering für die Energieholzernte wäre.

Ferner werden bei der Pflanzung der Bäume so genannte Stellvertreterbäume St vorgesehen. Diese werden in der Reihe der Z-Bäume benachbart zu den Z-Bäumen gepflanzt. Sollte es dazu kommen, dass der geplante Z-Baum seine vorgesehene Entwicklung nicht ausreichend vollzieht, wird ein Stellvertreter St als neuer Z-Baum definiert. Dadurch wird ohne großen Aufwand Anwuchssicherheit und Qualität der Z-Bäume sichergestellt. Es wird also vorerst lediglich der Z-Baum auf seine Tauglichkeit geprüft und nur im negativen Fall durch einen der Stellvertreter St ersetzt (Abgleich). Vorzugsweise sind ein oder zwei Stellvertreter St pro Z-Baum vorgesehen. Es können auch Stellvertreter für die E2-Bäume / Schutzbäume vorgesehen werden. Da die Stellvertreter (Nachbarn zum geplanten Z-Baum in der Reihe bzw. zu den E2-Bäumen) nach dem Abgleich abgeschnitten werden, erhält der Z-Baum wie auch der E2-Baum bereits in der Wachstumszeit bis zur ersten Ernte einen größeren Wuchsraum als alle benachbarten Energiebäume. Z-Bäume wie E2-Bäume haben damit auch genügend Platz, um sich in der ersten Wachstumsphase bis zur ersten Ernte der Energiebäume dem Produktionsziel entsprechend zu entwickeln. Nach der ersten Ernte haben die auf der Fläche verbleibenden Z-Bäume im Wuchsraum zunächst keine Konkurrenz und können sich weiterhin frei entwickeln. Die zweite Energiebaumernte erfolgt dann nachdem der Kronenschluß erneut erreicht ist. Die Z-Bäume können so gemeinsam mit den Energiebäumen in Reihen gepflanzt werden. Der Standort der Z-Bäume Z, der Stellvertreter St, der Schutzbäume E2 wie der der Energiebäume E ist damit im Anbauplan bereits konkret vorbestimmt. Damit steht auch das Bewirtschaftungsprogramm bereits im Zeitpunkt 0 bei Flächenanlage für jeden Baum fest.

Abschließend werden diese Abstände dann noch auf die technischen Einstellungsmöglichkeiten der Pflanzmaschine abgestimmt (wenn beispielsweise die Setzlinge nur in Abständen von ganzen Metern eingepflanzt werden können, werden die Z-Baumabstände unter Berücksichtigung der Rückegassenbreite entsprechend angepasst). In der Realität ist also zu erwarten, dass der tatsächliche Pflanzverband der Z-Bäume vom errechneten Pflanzraster abweicht und man versuchen wird sich anzunähern.

Die Pflanzung der Stamm- und Energieholzbäume kann einheitlich kostengünstig maschinell mit Steckhölzern (20 cm) erfolgen, während in der Pappelplantagenwirtschaft für längere Umtriebszeiten für Stammholzproduktion üblicherweise teurere, lange Ruten gepflanzt werden. Dies ist in der traditionellen Plantagenwirtschaft für die Stammholzproduktion notwendig, um mangels Stellvertreter die Anwuchssicherheit zu erhöhen, den langfristigen Herbizideinsatz zu erleichtern und Nachpflanzungen zu vermeiden, da Ausfälle mit Blick auf das eine Produktionsziel später nur schwer und mit hohen Nachpflanzkosten kompensiert werden können. Anders ist dies im beschriebenen Kombinationsverfahren. Auch beim äußerst unwahrscheinlichen Ausfall von Z-Baum und der Stellvertreter würden die verbleibenden Energiebäume den Lichtraum relativ schnell nutzen und damit auch den Ausfall weitestgehend kompensieren. Weiterhin führen die relativ engen Pflanzverbände innerhalb von regelmäßig 2 - 4 Jahren zu einem Abdunkeln der Fläche (Kronenschluß), so dass Unkräuter verschwinden. Unkräuter sind bei konsequenter Flächenpflege im ersten Jahr deshalb im Kombinationsverfahren bereits nach dem zweiten Jahr kaum Nährstoffkonkurrenz zu den Bäumen, sodass nachfolgende Pflege- und Herbizideinsätze weitgehend nicht mehr notwendig sind.

Nach der Pflanzung wird vorzugsweise nach etwa 0,5 bis 2 Jahren einmalig ein Z-Baum-Abgleich und je nach Bedarf auch ein E2-Baum-Abgleich durchgeführt. Dieser Abgleich erfolgt nach einer vorgegebenen Vegetationszeit bzw. vor Beginn der nächsten Vegetationszeit innerhalb der ersten 24 Monate, vorzugsweise also nach ca. 6, 12, 18 oder 24 Monaten. Dies bedeutet, dass die beiden direkten Nachbarn in der Reihe (in der Regel die Stellvertreter) abgezwickt werden, um dem Z-Baum bis zur ersten Energieholzernte zusätzlichen Wuchsraum zu ermöglichen. Bei Ausfall oder klarem Minderwuchs des Z-Baums gegenüber seinen direkten Baumnachbarn wird einer der Nachbarn zum Stellvertreter für den Z-Baum bestimmt, wodurch ein Nachpflanzen entfällt. Diese Maßnahme trifft ggf. auch auf die gleiche Anzahl von Energiebäumen (E2-Bäume) zu, die bis zur 2ten Energieholzernte auf der Fläche verbleiben.

In den Jahren 2 - 9 nach Pflanzung der Z-Bäume werden diese ein-, zwei- oder auch mehrmals entastet (die so genannte Wertentastung). Dies betrifft jedoch lediglich die Z-Bäume, da die E2-Bäume nicht als Stammholz verwendet werden sollen und die Holzqualität bei diesen keine große Rolle spielt. Die Z-Bäume werden nach forstlichen Prinzipien ggf. auch nach den Energieholzernten soweit sich Wasserreißer gebildet haben bis auf eine Maximalhöhe von 9m entastet.

Die erste Energieholzernte wird in den Jahren 5-9 durchgeführt. Die Energieholzernte ist ab einer Baumhöhe von ca. 8-12m möglich und sinnvoll und betrifft bis auf die E2-Bäume alle verbleibenden Energiebäume. Eine zweite Energieholzernte ist dann in den Jahren 10-15 vorgesehen. Bei der zweiten Ernte werden auch alle E2-Bäume sowie der Wiederaustrieb der übrigen Energiebäume abgeerntet. Der Erntezeitpunkt ist in etwa dann vorgesehen, wenn der Kronenschluß zwischen Z-Bäumen und E2-Bäumen erreicht ist, das heißt wenn sich die Baumkronen dieser Bäume berühren. Die Erntetermine für die Energieholzernte sind also so gewählt, dass die Z-Bäume im Wachstum kaum / keine Einschränkung erfahren, wie der Blick auf den potentiellen Kronenraum zeigt, und somit im Kombinationsverfahren bezogen auf das Produktionsziel Stammholz, verglichen mit der reinen Stammholzproduktion, keine bis geringe Mindererträge an Stammholz zu erwarten sind.

Die Z-Baumernte fällt dann in die Jahre 16 - 20. Zu diesem Zeitpunkt werden der Zieldurchmesser erreicht und die Z-Bäume geerntet. Der nicht als Stammholz verwertbare Anteil der Z-Bäume wird zu Holzhackschnitzel verarbeitet.

Anschließend wird nach der Z-Baumernte die Fläche geräumt und kann entweder neu bepflanzt oder als Acker weitergenutzt werden.

In diesem Verfahren wird insbesondere die Pappel und Robinie als Stammholzbaum und auch als Energieholzbaum verwendet. Dadurch wird auch der Pflanzaufwand minimiert, da es sich bei Z-, Stellvertreter-, Energie- oder E2-Bäumen grundsätzlich um die gleiche Baumart mit grundsätzlich gleichem Wuchsverhalten handelt und auch das gleiche Pflanzmaterial verwendet werden kann. Der laufende jährliche Zuwachs der Pappel oder Robinie steigert sich sukzessive in den ersten Jahren, wie auch bei allen anderen Baumarten im Forst. Sie erreicht jedoch in einem für Forstbäume sehr frühen Stadium, in den Jahren 10 - 20, ihren Maximalzuwachs (vgl. Fichte ca. Jahr 45 - 50).

Die Pflanzung im Kombinationsverfahren erfolgt ausschließlich mit Steckhölzern. Durch den anfänglich engen Standraum der Z-Bäume, der sich nach den Bewirtschaftungsschritten Z-Baum-Abgleich und Energieholzernte sprunghaft vergrößert, werden die Z-Bäume erzogen. also im Wuchsverhalten gefördert. Gleichfalls verringert sich aufgrund der Beschirmung durch die Energieholzbäume der Entastungsaufwand. Der Pflanzverband ermöglicht aufgrund des vorgegebenen Pflanzrasters (inkl. der Abstände zwischen den Reihen) den effizienten und preiswerten Einsatz der heutigen Pflanz-, Pflege- und Erntetechnik (analog zur sonstigen Plantagenwirtschaft).

Das Verfahren wird noch kurz beispielhaft unter Bezugnahme auf die Figuren beschrieben und mit Beispielen anschaulich dargestellt. Zuerst wird entschieden, welche Stammholzdicken gewünscht sind. Daraus ergibt sich dann, ob eine vorgegebene Fläche für niedrige oder für hohe Baumanzahl verwendet wird und das entsprechende Raster für die genaue Berechnung der Anzahl der Z-Bäume angewendet. Für eine niedrige Z-Baumanzahl wird der Anbauplan mit dem quadratischen / gleichschenklig-rechtwinkligen Raster aus Figur 1 verwendet, für eine hohe Anzahl an Z-Bäumen der Anbauplan mit dem gleichseitigen Dreiecksraster aus Figur 2. Aus den weiteren Informationen wie der Mindestbreite der Rückegasse, die unter anderem von den entsprechenden Ernte- oder Abholzmaschinen abhängt, können dann die Basisabstände der Z-Bäume und die Z-Baumabstände innerhalb einer Z-Baumreihe berechnet werden. Abschließend werden diese Abstände dann noch an die Einstellungsmöglichkeiten der Pflanzmaschine abgestimmt(wenn beispielsweise die Setzlinge nur in Abständen von ganzen Metern eingepflanzt werden können, werden die Z-Baumabstände unter Berücksichtigung der Rückegassenbreite entsprechend angepasst).

### Beispiel 1: Anbauplan für Plantagen mit niedriger Z-Baumanzahl

Das Pflanzverfahren entspricht dem aus Figur 1 mit gleichschenklig-rechtwinkligem Dreiecksraster.

| | |
|---|---|
| Bäume pro Hektar | 4.000 |
| Z-Bäume | 200 (Zieldurchmesser 35 - 45 cm) |
| E2-Bäume | 200 |
| Energiebäume | 2.800 |
| Stellvertreter | 800 |

Durch den geforderten Zieldurchmesser der Z-Bäume ergibt sich die Planungszahl der Z-Bäume und der anderen Bäume. Die Rückegasse entspricht dem Abstand A zwischen den Z-Baumreihen und hat die Rückegassebreite A von 5m. Der Z-Baum Basisabstand z ist dann z= √ (A²+A²) = (5²+5²) = ca. 7,07m. Die E2-Bäume liegen ebenso in Z-Baumreihen. Die Abstände zwischen den Z-Bäumen in einer Reihe entsprechen 2A, die Abstände zwischen Z-Baum und E2-Baum entsprechen A. Diese Abstände können dann noch an die Bedingungen der Pflanzmaschinen angepasst werden.

### Beispiel 2: Anbauplan für Plantagen mit hoher Z-Baumanzahl

Das Pflanzverfahren entspricht dem aus Figur 1 mit gleichseitigem Dreiecksraster nach Figur 2.

| | |
|---|---|
| Bäume pro Hektar | 3.200 |
| Z-Bäume | 400 (Zieldurchmesser 30 - 35 cm) |
| E2-Bäume | 0 |
| Energiebäume | 2.800 |
| Stellvertreter | 800 |

Bei der Verwendung und einer theoretisch optimalen Verteilung der Z-Bäume ergibt sich der Z-Baumabstand z in Abhängigkeit zum gewünschten gleichmäßigen Kronenraum bei gegebener Anzahl der Zielbäume i einen Z-Baumabstand z = ((10.000 m²/i)*2/(3(3^{1/2})))^{1/2} und im Verhältnis zur Rückegassenbreite A z²=A²+(z/2)².

Daraus ergibt sich ein gleichmäßiger Z-Baumabstand von 5,37m und eine Rückegassenbreite A von 4,65m. In der Praxis nach Anpassung an die Pflanzmaschine könnte der Z-Baumabstand in der Reihe dann bei 5m und die Rückegassenbreite ebenso bei 5m liegen.

## Patentansprüche

1. Verfahren zur Vorbereitung der Bewirtschaftung einer Plantagenfläche mit Bäumen, für die Energieholz- und Stammholzproduktion bei Kurzumtriebsplantagen, umfassend die Schritte
Festlegen der Anzahl der zu pflanzenden Z-Bäume (Z);
Festlegen der Positionen der Z-Bäume (Z) in mehreren Reihen in vorbestimmten Abständen zueinander;
Festlegen der Positionen für die Energieholzbäume (E), in eigenen Reihen zwischen den Reihen für Z-Bäume, wobei an vorbestimmte Positionen in den Z-Baumreihen zusätzlich Energieholzbäume (E) als Schutzbäume (E2) und/oder innerhalb einer Z-Baumbaureihe auch Energieholzbäume (E) vorgesehen sind.

2. Verfahren zum Bepflanzen einer Fläche für Stammholz und Energieholz bei Kurzumtriebsplantagen, umfassend die Schritte
Bereitstellen von Energieholzbäumen (E) und Z-Bäumen;
Pflanzen der Z-Bäume (Z) in vorbestimmten Positionen in mehreren Reihen in vorbestimmten Abständen;
Pflanzen der Energieholzbäume (E) in eigenen Reihen zwischen den Reihen der Z-Bäume (Z), wobei an vorbestimmte Positionen in den Z-Baumreihen zusätzlich Energieholzbäume (E) als Schutzbäume (E2) und/oder innerhalb einer Z-Baumbaureihe auch Energieholzbäume (E) vorgesehen sind.

3. Verfahren nach einem der vorhergehenden Ansprüche, bei dem die Abstände zwischen zwei benachbarter Z-Baumreihen mindestens 4, m als Mindestrückengassenbreite sind.

4. Verfahren nach einem der vorhergehenden Ansprüche, bei dem innerhalb der Reihe und benachbart zu den Z-Bäumen (Z) Stellvertreterbäume für den Abgleich vorgesehen sind.

5. Verfahren nach einem der vorhergehenden Ansprüche, bei dem die Z-Bäume (Z) in zwei benachbarten Z-Baumreihen versetzt angeordnet sind.

6. Verfahren nach Anspruch 5, bei dem die Anordnung der benachbarten Z-Bäume (Z) in einer Reihe zusammen mit einer Z-Bäumen einer benachbarten Reihen ein im Wesentliches gleichschenkliges Dreieck ausbildet.

7. Verfahren nach Anspruch 6, bei dem die gleichen Schenkel eines Dreiecks in einem Winkel von 55° bis 65° oder 85° bis 95° ausgebildet sind

8. Plantage mit Bäumen für die Energieholz- und Stammholzproduktion umfassend eine Mehrzahl von Z-Baumreihen und eine Mehrzahl von Energieholzreihen zwischen den Z-Baumreihen, wobei an vorbestimmte Positionen in den Z-Baumreihen zusätzlich Energieholzbäume (E) als Schutzbäume (E2) und/oder innerhalb einer Z-Baumbaureihe auch Energieholzbäume (E) vorgesehen sind.

## Claims

1. Method for preparing to manage a tree plantation area, for the production of fuel wood and logs with short rotation plantations, comprising the steps of
determining the number of Z-trees (Z) to be planted,
determining the positions of the Z-trees (Z) in a plurality of rows at predetermined distances from each other,
determining the positions of the fuel wood trees (E), in their own rows between the rows of Z-trees, wherein additional fuel wood trees (E) are provided as protection trees (E2) at predetermined positions in the Z-tree rows and/or fuel wood trees (E) are also provided within a Z-tree row.

2. Method for planting an area for logs and fuel wood with short rotation plantations, comprising the steps of
providing fuel wood trees (E) and Z-trees,
planting the Z-trees (Z) in predetermined positions in a plurality of rows at predetermined distances,
planting the fuel wood trees (E) in their own rows between the rows of Z-trees (Z), wherein additional fuel wood trees (E) are provided as protection trees (E2) at predetermined positions in the Z-tree rows and/or fuel wood trees (E) are also provided within a Z-tree row.

3. Method according to any of the preceding claims, in which the distances between two adjacent Z-tree rows are at least 4 m as a minimum logging trail width.

4. Method according to any of the preceding claims, in which substitute trees are provided within the row and adjacent to the Z-trees (Z) for alignment.

5. Method according to any of the preceding claims, in which the Z-trees (Z) in two adjacent Z-tree rows are offset.

6. Method according to claim 5, in which the arrangement of the adjacent Z-trees (Z) in one row together with a Z-tree in an adjacent row forms an essentially isosceles triangle.

7. Method according to claim 6, in which the equal sides of a triangle are formed at an angle of 55° to 65° or 85° to 95°.

8. Tree plantation for the production of fuel wood and logs comprising a plurality of Z-tree rows and a plurality of fuel wood rows between the Z-tree rows, wherein additional fuel wood trees (E) are provided as protection trees (E2) at predetermined positions in the Z-tree rows and/or fuel wood trees (E) are also provided within a Z-tree row.

## Revendications

1. Procédé destiné à la préparation de l'exploitation d'une surface de plantation avec des arbres, pour la production de bois de chauffage et de bois de grume lors de plantations à rotation courte, comprenant les étapes de
détermination du nombre d'arbres Z (Z) à planter ;
détermination des emplacements des arbres Z (Z) en plusieurs rangées espacées les unes des autres à des intervalles prédéterminés ;
détermination des emplacements pour les arbres de bois de chauffage (E), dans leurs propres rangées entre les rangées pour les arbres Z, dans lequel, à des emplacements prédéterminés dans les rangées d'arbres Z, sont prévus en plus des arbres de bois de chauffage (E) en tant qu'arbres de protection (E2) et/ou, à l'intérieur d'une rangée de série d'arbres Z, également des arbres de bois de chauffage (E).

2. Procédé destiné à boiser une surface de bois de grume et de bois de chauffage lors de plantations à rotation courte, comprenant les étapes de
fourniture d'arbres de bois de chauffage (E) et d'arbres Z ;
plantation des arbres Z (Z) à des emplacements prédéterminés en plusieurs rangées espacées à des intervalles prédéterminés ;
plantation des arbres de bois de chauffage (E) en rangées propres entre les rangées des arbres Z (Z), dans lequel, à des emplacements prédéterminés dans les rangées d'arbres Z, sont prévus en plus des arbres de bois de chauffage (E) en tant qu'arbres de protection (E2) et/ou, à l'intérieur d'une rangées de série d'arbres Z, également des arbres de bois de chauffage (E).

3. Procédé selon l'une quelconque des revendications précédentes, pour lequel les intervalles entre deux rangées d'arbres Z adjacentes présentent une largeur minimale d'allée arrière d'au moins 4 m.

4. Procédé selon l'une quelconque des revendications précédentes, pour lequel à l'intérieur des rangées et de manière adjacente aux arbres Z (Z) sont prévus des arbres de substitution pour la comparaison.

5. Procédé selon l'une quelconque des revendications précédentes, pour lequel les arbres Z (Z) sont disposés de manière décalée en deux rangées d'arbres Z adjacentes.

6. Procédé selon la revendication 5, pour lequel la disposition des arbres Z (Z) adjacents dans une rangée ensemble avec un arbre Z d'une rangée adjacente réalise sensiblement un triangle isocèle.

7. Procédé selon la revendication 6, pour lequel les côtés égaux d'un triangle sont réalisés selon un angle de 55° à 65° ou de 85° à 95°.

8. Plantation d'arbres pour la production de bois de chauffage et bois de grume comprenant une pluralité de rangées d'arbres Z et une pluralité de rangées de bois de chauffage entre les rangées d'arbres Z, dans laquelle à un emplacement prédéterminé dans les rangées d'arbres Z sont prévus en plus des arbres de bois de chauffage (E) en tant qu'arbres de protection (E2) et/ou à l'intérieur d'une rangée de série d'arbres Z également des arbres de bois de chauffage (E).
